# EUROPÄISCHE PATENTSCHRIFT

(11) **EP 1 573 679 B1**
(45) Veröffentlichungstag und Bekanntmachung des Hinweises auf die Patenterteilung: **09.07.2008**
(21) Anmeldenummer: 03779550.7
(22) Anmeldetag: 19.12.2003
(51) Int. Cl.: G07B 15/00, G08C 23/04, H04B 10/22

(54) **KRAFTFAHRZEUG-INFRAROT (IR)-KOMMUNIKATIONSEINRICHTUNG**
INFRARED (IR) COMMUNICATION DEVICE FOR MOTOR VEHICLES
DISPOSITIF DE COMMUNICATION À INFRAROUGE POUR VEHICULE AUTOMOBILE

(30) Priorität: 19.12.2002 AT 19002002
(43) Veröffentlichungstag der Anmeldung: 14.09.2005
(73) Patentinhaber: Efkon AG, 8045 Graz (AT)
(72) Erfinder: PAMMER, Raimund, A-8503 St. Josef (AT); BOH, Wolfgang, A-8045 Graz (AT)
(74) Vertreter: Sonn & Partner Patentanwälte
(86) Internationale Anmeldenummer: PCT/AT2003/000377
(87) Internationale Veröffentlichungsnummer: WO 2004/057541

(56) Entgegenhaltungen:
- EP-A- 0 413 948
- DE-A- 3 248 544
- DE-A- 4 239 863
- DE-A- 4 327 263
- US-A- 5 825 007

## Beschreibung

Die Erfindung betrifft eine Kraftfahrzeug-Infrarot (IR)-Kommunikationseinrichtung, vorzugsweise für ein elektronisches Vergebührungssystem gemäß dem einleitenden Teil von Anspruch 1.

Bekannte Kommunikationseinrichtungen für Kraftfahrzeuge auf der Basis von Infrarot, auch "On Board units" (kurz OBU) genannt, werden für elektronische Straßenmautsysteme oder aber auch für die Gebühreneinhebung auf Parkplätzen etc., allgemein für elektronische Vergebührungssysteme eingesetzt, wobei diese OBUs zum Zusammenwirken mit stationären Kommunikationseinrichtungen an der jeweiligen Verkehrsfläche, z.B. in Form von Baken an Autobahnen, vorgesehen sind. Infrarot-Kommunikationseinrichtungen bzw. Gebührensysteme sind beispielsweise aus WO 01/59711 bekannt. Aus der EP 625 767 A ist es weiters auch bekannt, mit solchen Kommunikationseinrichtungen ausgerüstete Kraftfahrzeuge hinsichtlich einer ordnungsgemäßen Gebührenabbuchung, die über die OBU erfolgt, von fahrenden Kontrollfahrzeugen aus zu überprüfen (sog. "mobiles Enforcement"). Dabei ist es jedoch notwendig, dass das kontrollierende Fahrzeug das zu kontrollierende Fahrzeug überholt und sich vor dieses setzt, um sodann durch das Heckfenster zurück mit dem kontrollierten Fahrzeug die IR-Kommunikation aufzunehmen und bei diesem Fahrzeug Gebührendaten bzw. protokollierte Abbuchungen abzufragen. Wenn dabei festgestellt wird, dass keine Abbuchungen protokolliert wurden bzw. unter Umständen überhaupt eine OBU im kontrollierten Fahrzeug fehlt, kann das kontrollierte Fahrzeug registriert oder aber unmittelbar angehalten werden, um entsprechende Fahrzeug- und Fahrerdaten aufzunehmen.

Ein Problem dabei ist jedoch, dass es nicht immer ohne weiteres möglich ist, sich vor ein zu kontrollierendes Fahrzeug zu setzen, so dass das beschriebene sog. "mobile Enforcement" dann nicht durchführbar ist. Andererseits sind die Kommunikationseinrichtungen in der Regel nur für kurze Entfernungen, beispielsweise 5 bis 10 m eingerichtet, wobei der Abstrahlwinkel bzw. Empfangswinkel, allgemein die Richtcharakteristik der Sende- bzw. Empfangselemente, relativ schmal ist, so dass die beschriebene Kontrolle anders als nach Überholen nicht durchgeführt werden kann.

Weiters kann die beschriebene Kommunikationseinrichtung, deren Sende- und Empfangselemente in Fahrtrichtung ausgerichtet sind, aus diesem Grund auch nicht für andere Zwecke genutzt werden, wobei es oft wünschenswert wäre, eine anderweitige Kommunikation mit dem jeweiligen Fahrzeug zu ermöglichen.

Aus der DE 32 48 544 A, die eine Kommunikationseinrichtung wie eingangs angegeben offenbart, ist es bekannt, dass in einem Kraftfahrzeug mehrere in verschiedene Richtungen strahlende IR-Sendeelemente sowie aus verschiedenen Richtungen empfangende Empfangselemente vorgesehen sind. Allerdings ist hier nur die Informationsübertragung zwischen ortsfesten Baken und Fahrzeugen betroffen, nicht jedoch die Informationsübertragung zwischen Fahrzeugen, etwa im Zuge eines "Enforcements" oder zum Austauschen von Verkehrsinformationen zwischen einander begegnenden Kraftfahrzeugen.

In der DE 42 39 863 A ist schließlich ein System zur optischen Datenübertragung beschrieben, bei dem ein Senden bzw. Empfangen nur nach vorne und hinten bzw. nur von vorne und hinten vorgesehen ist.

Es ist nun Aufgabe der Erfindung, den Nachteilen des Standes der Technik abzuhelfen und die Kommunikationseinrichtung so auszugestalten, dass weitere Kommunikationsmöglichkeiten geschaffen werden, und dass insbesondere auch eine Basis für ein mobiles Enforcement durch ein kontrollierendes Kraftfahrzeug in effizienter weise erzielt wird.

Zur Lösung dieser Aufgabe sieht die Erfindung eine Kommunikationseinrichtung mit den Merkmalen gemäß Anspruch 1 vor. Vorteilhafte Ausführungsformen und Weiterbildungen sind in den Unteransprüchen angegeben.

Bei der vorliegenden Kommunikationseinrichtung ist vorgesehen, außer in Fahrtrichtung auch in seitlicher Richtung eine selektive Kommunikation zu ermöglichen, wobei diese seitliche Kommunikation für verschiedene Zwecke, insbesondere für ein mobiles Enforcement mit Hilfe von vorbeifahrenden kontrollierenden Fahrzeugen, aber auch für eine Kommunikation beispielsweise mit in Gegenrichtung fahrenden Kraftfahrzeugen, zur Übermittlung von wichtigen Verkehrsinformationen (z.B. im Falle der Warnung vor einem Stau oder einer Nebelwand) genutzt werden kann. Diese Kommunikation in der zweiten Richtung, der "Seitenrichtung", kann dabei so vorgesehen sein, dass nur auf einer Seite des Kraftfahrzeugs diese weitere, selektive Kommunikation ermöglicht wird, insbesondere im Fall von Rechtsverkehr vom Fahrer aus gesehen schräg nach links vorne, im Fall von Linksverkehr jedoch schräg nach rechts vorne. Gegebenenfalls kann diese Kommunikation jedoch auch sowohl nach links wie auch nach rechts, vom Fahrer des Kraftfahrzeugs aus gesehen, eingebaut werden, und die Abstrahlwinkel können überdies relativ weit variieren. Im Hinblick auf einen ausreichend langen Zeitabschnitt, während dessen Sende- und Empfangskeulen von zwei in entgegengesetzten Richtungen fahrenden Fahrzeugen einander überschneiden, ist eine schräge Ausrichtung im Vergleich zu einer um 90° zur Fahrtrichtung ausgerichteten Kommunikation vorzuziehen.

Als weitere, in der zweiten Richtung ausgerichtete IR-Elemente sind nur IR-Sendeelemente vorgesehen, wogegen für die in der ersten Richtung ausgerichteten IR-Empfangselemente eine für einen Empfang auch in der seitlichen Richtung ausreichend breite Richtcharakteristik vorgesehen ist. Da die IR-Sendeelemente im Vergleich zu Empfangselementen relativ viel elektrische Energie benötigen, ist auf diese Weise eine energieeffiziente, selektive Kommunikation mit Hilfe einiger weniger Infrarot-Sendeelemente sichergestellt, wobei andererseits durch die engen Richtcharakteristiken der jeweiligen Sendeelemente auch die Selektivität der Kommunikation in den beiden Richtungen nicht beeinträchtigt wird, wenn gemeinsame IR-Empfangselemente mit entsprechend breiter Richtcharakteristik für die Kommunikation in Fahrtrichtung ebenso wie in Seitenrichtung herangezogen werden. Dabei hat es sich als günstig gezeigt, wenn die Richtcharakteristik der in der ersten Richtung ausgerichteten IR-Empfangselemente einen Halbwertswinkel von ±50° bis +75°, vorzugsweise ca. ±60°, aufweist.

Für die seitliche Kommunikation, insbesondere zum Informationsaustausch mit entgegenkommenden Fahrzeugen, wäre idealerweise eine Richtcharakteristik anzustreben, die in Draufsicht parallelogrammförmig ist, um so annähernd konstante Weglängen für die Kommunikation in Fahrtrichtung bzw. Gegenfahrtrichtung für die beiden Fahrzeuge sicherzustellen. Eine solche Richtcharakteristik lässt sich auf einfache Weise sehr gut dadurch annähern, dass die in der zweiten Richtung ausgerichteten IR-Elemente zum Teil eine erste, schmälere Fernfeld-Richtcharakteristik und zu zumindest einem anderen Teil eine zweite, breitere, der ersten überlagerte Nahfeld-Richtcharakteristik aufweisen. Dabei wird weiters mit Vorteil vorgesehen, dass die zumindest zwei überlagerten Richtcharakteristiken in einem vorgegebenen Mischverhältnis, z.B. von ca. 2:1, einander überlagert sind, wobei das Mischverhältnis durch die jeweilige Anzahl der IR-Elemente und/oder die vorgegebene Größe des durch sie fließenden Stroms bestimmt ist. Hierbei weist vorzugsweise die schmälere Fernfeld-Richtcharakteristik einen Halbwertswinkel von ca. ±10° auf, wogegen die breitere Nahfeld-Richtcharakteristik bevorzugt einen Halbwertswinkel von ca. ±20° aufweist.

Wie bereits erwähnt, ist für die zweite Richtung bevorzugt eine schräge Ausrichtung vorzusehen, und insbesondere hat es sich hierbei als vorteilhaft erwiesen, wenn die zweite Richtung mit der vertikalen Längsebene einen Seitenwinkel von 35° bis 55°, vorzugsweise ca. 45°, einschließt. Wie bereits ausgeführt, werden bevorzugt ein und die selben IR-Empfangselemente für die Kommunikation in Geradeausrichtung ebenso wie in Seitenrichtung verwendet. Soweit die vorliegende Kommunikationseinrichtung dann beispielsweise nur bei elektronischen Maut- bzw. Vergebührungssystemen eingesetzt wird, wobei gegebenenfalls auch eine Kontrolle durch ein seitlich vorbeifahrendes bzw. überholendes Kraftfahrzeug ermöglicht wird, können die beiden Kommunikationen einfach in ein und der selben Empfangselektronik und angeschlossenen Datenverarbeitung zusammenlaufen. Wenn jedoch eine Kommunikation mit anderen Fahrzeugen zum Austauschen beispielsweise von Verkehrsinformationen ermöglicht werden soll, sind angesichts der gemeinsamen Empfangselemente und Empfangselektronik Vorkehrungen dafür zu treffen, dass die empfangenen Informationen oder Daten je nach ihrer Art voneinander getrennt weiterverarbeitet werden, und in Weiterbildung der Erfindung ist daher bevorzugt vorgesehen, dass mit der Empfangselektronik ein die Art von empfangenen Daten erkennender Datendiskriminator verbunden ist, an den verschiedene Datenverarbeitungskreise angeschlossen sind, denen je nach Datenart-Erkennung die zugehörigen Daten zugeführt werden. Da weiters von einem solchen Informationsaustausch zwischen einander begegnenden Fahrzeugen nur eine kurze Zeit, in der Größenordnung von ein bis drei Zehntelsekunden, verfügbar ist, und überdies für die Aussendung von Informationen kein besonderer Aufwand erforderlich sein darf, der die Konzentration des Fahrzeuglenkers in Anspruch nehmen würde, ist es zweckmäßig, bestimmte Informationen im Vorhinein zu speichern und mit Hilfe von Codes abzurufen. Es ist dann bevorzugt weiters vorgesehen, dass einem Datenverarbeitungskreis ein Speicher für vorgegebene Nachrichten zugeordnet ist und von einer anderen Kraftfahrzeug-Kommunikationseinrichtung in der zweiten Richtung gesendete, über die IR-Empfangsstelle empfangene, von der Empfangselektronik dem Datenverarbeitungskreis zugeleitete Daten Adresseninformationen zum Auslesen der jeweiligen Nachrichten aus dem Speicher umfassen. Die aus dem Speicher ausgelesenen Nachrichten können dann optisch, auf einem Display oder aber insbesondere auch akustisch wiedergegeben werden.

Wie ebenfalls bereits vorstehend ausgeführt wurde, kann die erfindungsgemäße Kommunikationseinrichtung mit Vorteil auch für eine Kontrolle durch mobile Kontrolleinheiten, d.h. Kontroll-Kraftfahrzeuge, herangezogen werden, und für diesen Fall wird insbesondere vorgesehen, dass ein Datenverarbeitungskreis einer Vergebührungseinheit zugeordnet sowie mit der Sendeelektronik zwecks Rücksenden von Vergebührungen betreffenden Daten in der zweiten Richtung verbunden ist.

Die Erfindung wird nachstehend anhand von bevorzugten Ausführungsbeispielen, auf die sie jedoch nicht beschränkt sein soll, noch weiter erläutert. Es zeigen:
Fig. 1 eine schematische, teilweise geschnittene Ansicht einer Infrarot-Kommunikationseinrichtung, die an einer teilweise dargestellten Windschutzscheibe eines Kraftfahrzeugs montiert ist, wobei schematisch und nicht maßstäblich auch eine Sendekeule für eine seitliche Kommunikation sowie eine Sende- und Empfangskeule für eine Fahrtrichtungs-Kommunikation in verkleinertem Maßstab eingezeichnet sind;
Fig. 2 eine Draufsicht auf diese Kommunikationseinrichtung, ohne Windschutzscheibe, mit Veranschaulichung einer Seitenkeule für die Kommunikation in der zweiten, seitlichen Richtung;
Fig. 3 schematisch ein IR-Sendeelement auf einem Chip mit zugehöriger Sendekeule bzw. Richtcharakteristik;
Fig. 4 eine Richtcharakteristik, die aus zwei Sendekeulen von zwei IR-Sendeelementen oder zwei Gruppen von Sendeelementen zusammengesetzt ist, nämlich mit einer Nahfeld-Richtcharakteristik und mit einer schmäleren Fernfeld-Richtcharakteristik;
Fig. 5 in einer ganz schematischen Draufsicht die Verwendung einer erfindungsgemäßen Kommunikationseinrichtung für die Zwecke einer Kontrolle durch ein überholendes Kontroll-Kraftfahrzeug;
Fig. 6 in den Teilfiguren 6A und 6B zugehörige Blockschaltbilder für die Sende- und Empfangseinrichtungen im kontrollierten Fahrzeug (Fig. 6A) wie im kontrollierenden Fahrzeug (Fig. 6B);
Fig. 7 in einer vergleichbaren schematischen Draufsicht wie in Fig. 5 ein Kraftfahrzeug mit einer erfindungsgemäßen Kommunikationseinrichtung für eine Kommunikation in der zweiten, seitlichen Richtung mit einem in Gegenrichtung fahrenden, nur durch einen Pfeil angedeuteten Fahrzeug, mit einer Richtcharakteristik vergleichbar jener gemäß Fig. 4; und
Fig. 8 ein Blockschaltbild einer erfindungsgemäßen Kommunikationseinrichtung, die sowohl für den üblichen Austausch von Gebühreninformationen und das Abbuchen von Gebühren als auch für einen Datenaustausch mit entgegenkommenden Fahrzeugen eingerichtet ist.

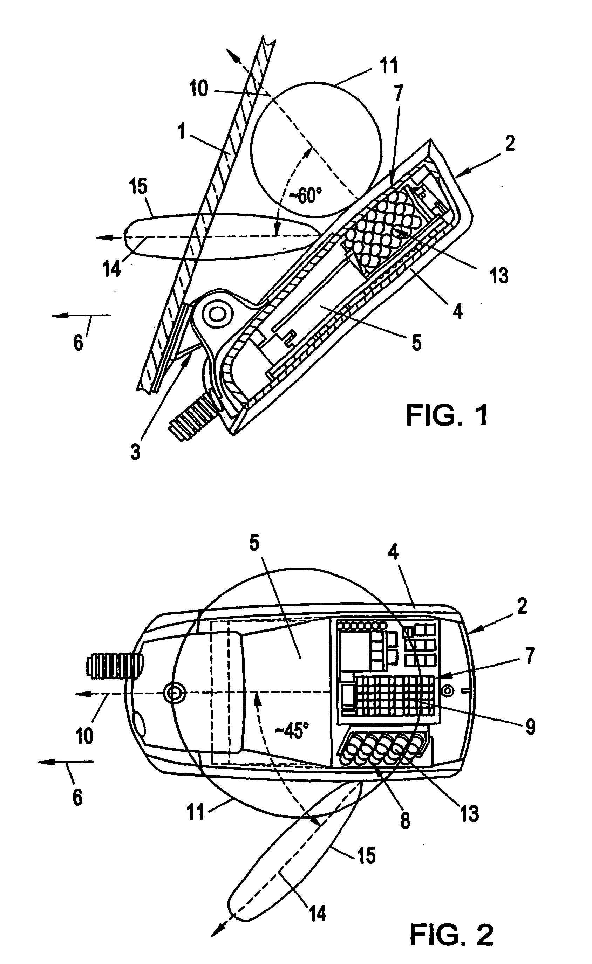

Gemäß Fig. 1 ist an einer Windschutzscheibe 1 eines im Weiteren nicht näher dargestellten Kraftfahrzeugs eine Infrarot-(IR-)Kommunikationseinrichtung 2 in Form einer sog. "On Board Unit" (nachstehend kurz OBU genannt) mit Hilfe eines Montagesockels 3 angebracht. Die OBU 2 besitzt ein Gehäuse 4, in dessen Innerem die erforderliche elektronische Schaltung 5 angeordnet ist, die in Fig. 1 - und auch vergleichbar in Fig. 2 - allerdings nicht näher veranschaulicht ist und auf an sich herkömmliche Art und Weise ausgebildet sein kann. Die Fahrtrichtung ist gemäß Zeichnungsdarstellung in Fig. 1 wie auch in Fig. 2 nach links, vgl. auch den jeweiligen Pfeil 6.

Im Gehäuse 4 sind hinter transparenten Fenstern 7 bzw. 8 Arrays von IR-Elementen vorgesehen, und zwar im Einzelnen an der nach vorne gewandten Breitseite des Geräts 2 ein Array 9 von IR-Sende- und Empfangselementen, vgl. Fig. 2, welche hinsichtlich Abstrahlung und Empfang in einer ersten Richtung 10 ausgerichtet sind; diese erste Richtung 10 (s. insbesondere Fig. 1) verläuft schräg aufwärts, um beispielsweise ca. 45° oder 55° zur Horizontalen geneigt und in einer vertikalen Ebene parallel zur Fahrtrichtung 6 oder aber auch zur Längsachse des nicht näher gezeigten Kraftfahrzeugs. In dieser ersten Richtung 10 haben die IR-Sende- und Empfangselemente jeweils eine relativ breite Richtcharakteristik sowohl in vertikaler Richtung (Fig. 1) als auch in horizontaler Richtung (Fig. 2), und zwar beispielsweise mit einem jeweiligen Halbwertswinkel von ±60°.

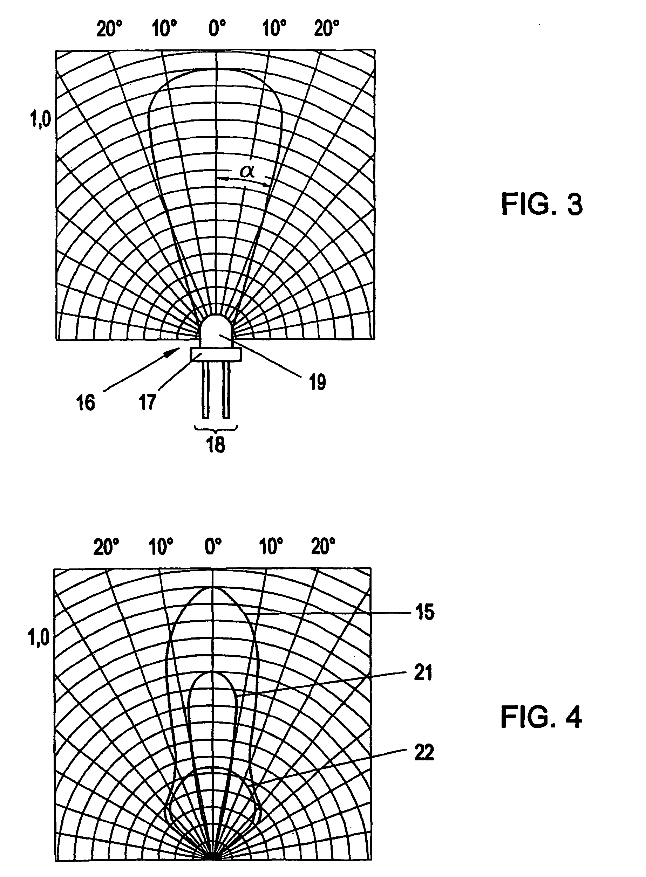

Das zweite Array von IR-Elementen 13 befindet sich seitlich im Gehäuse 4 der OBU 2, wobei es sich hier bevorzugt um bloße IR-Sendeelemente handelt, die in einer zweiten Richtung 14 schräg nach vorne und zur Seite, bezogen auf die Fahrtrichtung 6, ausgerichtet sind. Diese zweite Richtung 14 verläuft dabei bevorzugt, wie aus Fig. 1 ersichtlich ist, ungefähr horizontal, wenn das zugehörige Kraftfahrzeug auf einer ebenen Verkehrsfläche steht oder fährt. Der Winkel, den die zweite Richtung 14 mit der ersten Richtung 10, in Draufsicht gesehen (s. Fig. 2), oder aber mit der durch die erste Richtung 10 gelegten vertikalen Ebene in Fahrtrichtung 6 einschließt, beträgt beispielsweise ca. 45°. In den Figuren 1 und 2 ist weiters die diesen seitlich ausgerichteten IR-Sendeelementen 13 zugehörige schmälere Richtcharakteristik 15 gezeigt, wobei diese Richtcharakteristik 15, wie nachfolgend noch näher anhand der Fig. 4 erläutert werden soll, bevorzugt aus zwei Sendekeulen oder Richtcharakteristiken zusammengesetzt wird, indem das Array von IR-Sendeelementen 13 mit zwei Gruppen von IR-Sendeelementen realisiert wird, von denen die eine Gruppe eine schmälere Fernfeld-Richtcharakteristik und die andere eine demgegenüber etwas breitere Nahfeld-Richtcharakteristik definiert.

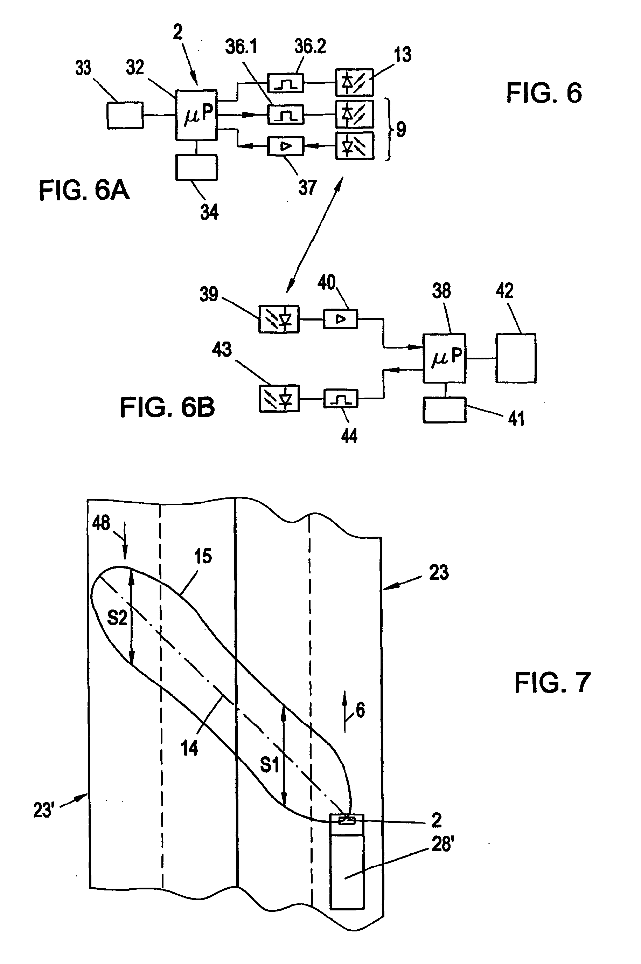

In Fig. 3 ist ein IR-Sendeelement 16 in Form einer lichtemittierenden Diode (LED) 16 gezeigt, wobei auf einem die eigentliche lichtemittierende Diode enthaltenden Chip (d.h. integrierten Schaltkreis) 17, der mit Anschlüssen 18 versehen ist, ein transparentes Kunststoffgehäuse 19 angebracht ist, das als Linse wirkt und beispielsweise einen Durchmesser von 3 mm bis 5 mm aufweist. Je nach Abstand des Chips 17 vom Brennpunkt der durch das Gehäuse 19 gegebenen Linse ergeben sich verschiedene Sendekeulen 20 mit definierten Halbwertswinkeln α. Gemäß Fig. 3 beträgt der Halbwertswinkel α der Sendekeule oder Richtcharakteristik 20 beispielsweise ca. ±20°. Wenn nun wie vorstehend angedeutet IR-Sendeelemente 16 mit verschiedenen Sendekeulen 20, mit unterschiedlichen Halbwertswinkeln α und Reichweiten, überlagert werden, kann eine kombinierte Richtcharakteristik 15 etwa der Form wie in Fig. 4 gezeigt erhalten werden, mit der eine - was die Weglänge in Fahrtrichtung anlangt - ungefähre parallelogrammförmige Gestalt (s. Fig. 7) erhalten werden kann.

Im Einzelnen ist gemäß Fig. 4 - nicht maßstäblich - eine schmälere Fernfeld-Richtcharakteristik 21 einer breiteren Nahfeld-Richtcharakteristik 22 überlagert, um so die kombinierte Richtcharakteristik 15 zu erhalten. Die Halbwertswinkel für die beiden Richtcharakteristiken 21, 22 betragen beispielsweise ca. ±10° bzw. ca. ±20°. Um das Fernfeld bzw. Nahfeld zu erzeugen, ist auch ein bestimmtes Mischverhältnis erforderlich, das durch die jeweilige Anzahl der Dioden, d.h. IR-Sendeelemente 13, und/oder durch den durch die Schaltung vorgegebenen Sendestrom durch die Dioden eingestellt werden kann, wie dies an sich bekannt ist und hier keiner weiteren Erläuterung bedarf. Auf diese Weise können mit Hilfe der kombinierten Richtcharakteristik 15 zwei ungefähr gleiche, konstante Kommunikationswege S1 und S2 (s. Fig. 7) erzielt werden.

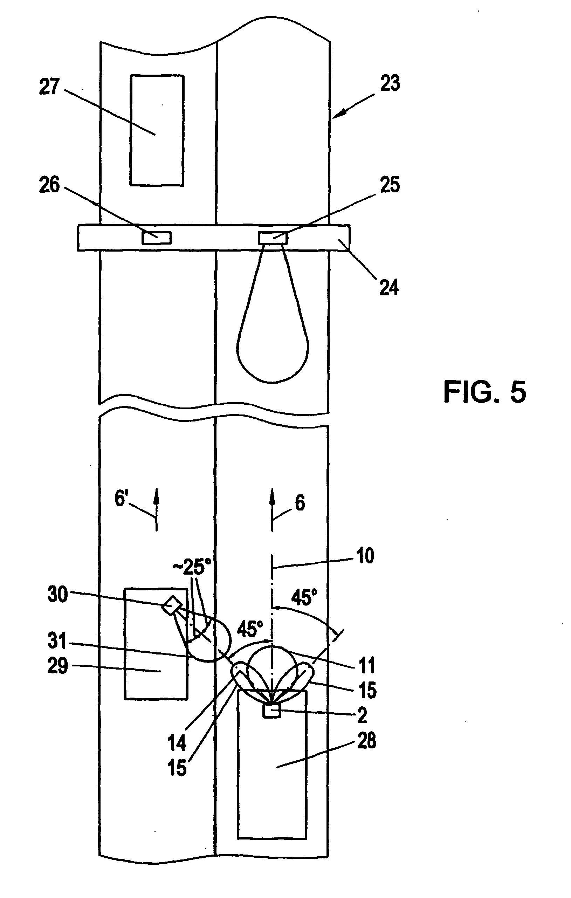

In Fig. 5 ist ganz schematisch in Draufsicht eine zweispurige Fahrbahn 23 gezeigt, die mit einer herkömmlichen stationären Überkopf-Mauteinheit 24 mit stationären Kommunikationseinrichtungen 25, 26 zur selektiven Kommunikation mit auf den Fahrspuren fahrenden Fahrzeugen 27, 28 eingerichtet ist. Diese stationären Kommunikationseinrichtungen, beispielsweise 25, kommunizieren im Einzelnen selektiv mit der jeweiligen OBU 2, z.B. im Fahrzeug 28, zwecks Abbuchung von Mautgebühren, wobei hier die IR-Sende- und Empfangselemente 9 der OBU 2 im Einsatz sind, die in der ersten Richtung 10, entsprechend einer vertikalen Ebene durch die Fahrtrichtung 6, ausgerichtet sind. Dieser Datenaustausch zwischen stationärer und mobiler Kommunikationseinrichtung zwecks elektronischer Mauteinhebung ist an sich bekannt und braucht hier nicht weiter erläutert werden.

Aus Fig. 5 ist weiters ersichtlich, dass auf zumindest einer Seite des Fahrzeugs 28, und zwar schräg nach vorne, in der zweiten Richtung 14, eine Sendekeule 15 gegeben ist, die von der OBU 2 bzw. genauer von deren zweiten IR-Sendeelementen 13 bestimmt ist, um so mit einem überholenden kontrollierenden Fahrzeug 29 zu kommunizieren, das eine vergleichbare Kommunikationseinrichtung 30 enthält, die in einem entsprechenden Winkel, beispielsweise 135° zur Fahrtrichtung 6', hinsichtlich Sende- und Empfangscharakteristik ausgerichtet ist, vgl. die Richtcharakteristik 31 mit einem Halbwertswinkel von ungefähr ±25° in Fig. 5. Auf diese Weise kann das kontrollierende Fahrzeug 29 in der OBU 2 des kontrollierten Fahrzeugs 28 Daten betreffend protokollierte Buchungen oder Mautgebührenbezahlungen wie auch betreffend den Fahrzeughalter abfragen. Dies kann auf einfache Weise beim Nebeneinanderfahren bzw. beim Überholvorgang erfolgen, und es ist nicht notwendig, dass sich das kontrollierende Fahrzeug 29 nach einem Fahrspurwechsel unmittelbar vor das kontrollierte Fahrzeug 28 setzt.

In Fig. 6 ist dieser Datenaustausch zwischen den Fahrzeugen 28 und 29 schematisch durch Veranschaulichen von Blockschaltbildern der entsprechenden Kommunikationseinrichtungen 2 (Fig. 6A) und 30 (Fig. 6B) dargestellt. Die OBU 2 des kontrollierten Fahrzeugs 28 enthält beispielsweise (s. Fig. 6A) in an sich herkömmlicher Weise einen Mikroprozessor 32, dem ein Speicher 33 sowie eine "Gebührenkarte" 34 zugeordnet sind, und der zwei gesonderte Sendeelektronik-Komponenten 36.1 (für das Senden in der ersten Richtung 10, mit Hilfe der ersten IR-Sendeelemente im Array 9) sowie eine zweite Sendeelektronik 36.2 (für das Senden in der zweiten Richtung 14, mit Hilfe der IR-Sendeelemente 13 des zweiten Arrays) ansteuert. Für die Kommunikation in beiden Richtungen 10, 14 dienen die gemeinsamen IR-Empfangselemente im ersten Array 9, deren Ausgangssignale in einer Verstärker- und Impulsformerstufe 37 für ein Anlegen an den Mikroprozessor 32 aufbereitet werden.

In der Kommunikationseinrichtung 30 des kontrollierenden Fahrzeugs 29 (s. Fig. 6B) ist in vergleichbarer Weise ein Mikroprozessor 38 als zentraler Steuer- und Datenverarbeitungsbaustein enthalten, dem die über IR-Empfangsdioden oder allgemein IR-Empfangselemente 39 empfangenen IR-Signale nach entsprechender Verstärkung und Impulsformung in einem Verstärker und Impulsformbaustein 40 zugeführt werden. Dem Mikroprozessor 38 sind weiters eine Steuer- bzw. Eingabeeinheit 41 sowie ein Speicher 42 zugeordnet. Ferner ist in Fig. 6B ersichtlich, dass der Mikroprozessor 38 bei einer entsprechenden Eingabe über die Eingabeeinheit 41 IR-Sendeelemente in Form von LEDs 43 über eine zugehörige Sendeelektronik 44 ansteuert. Dies geschieht bei einem Kontrollvorgang einleitend, um die OBU 2 im kontrollierten Fahrzeug 28 "aufzuwecken" und dann abzufragen, d.h. zu einer Übertragung vorgegebener protokollierter Buchungsdaten aufzufordern. Diese Buchungsdaten werden daraufhin vom Mikroprozessor 38 in der OBU 2 aus dem Speicher 32 ausgelesen und über die Sendeelektronik 36.2 und die IR-Sendeelemente 13 gesendet sowie von der Kommunikationseinrichtung 30 über deren Empfangselemente 43 empfangen.

In Fig. 7 ist schematisch eine weitere Anwendungsmöglichkeit der vorliegenden Kommunikationseinrichtung 2 veranschaulicht. Wiederum fährt ein mit einer solchen Kommunikationseinrichtung bzw. OBU 2 ausgerüstetes Kraftfahrzeug 28' in eine Fahrtrichtung 6 auf beispielsweise der rechten Fahrspur einer Autobahn-Fahrbahn 23. Auf der Gegenrichtungs-Fahrbahn 23' fährt beispielsweise ein nur durch einen Pfeil angedeutetes Fahrzeug 48, und zwar auf der Gegenfahrbahn ebenfalls in der rechten Fahrspur. In Fig. 7 ist schematisch für das Fahrzeug 28' auch die kombinierte Richtcharakteristik 15 (vgl. die vorstehenden Ausführungen zu Fig. 4) veranschaulicht, wobei ersichtlich ist, dass ungefähr konstante Weglängen S1, S2 durch die kombinierte Richtcharakteristik 15 für die beiden Fahrzeuge 28' bzw. 48 überdeckt werden, um die Kommunikation in Fahrtrichtung bzw. Gegenfahrtrichtung in adäquater Weise zu bewerkstelligen. Dies gilt auch, wenn die beiden Fahrzeuge 28', 48 in der jeweils linken Fahrspur fahren.

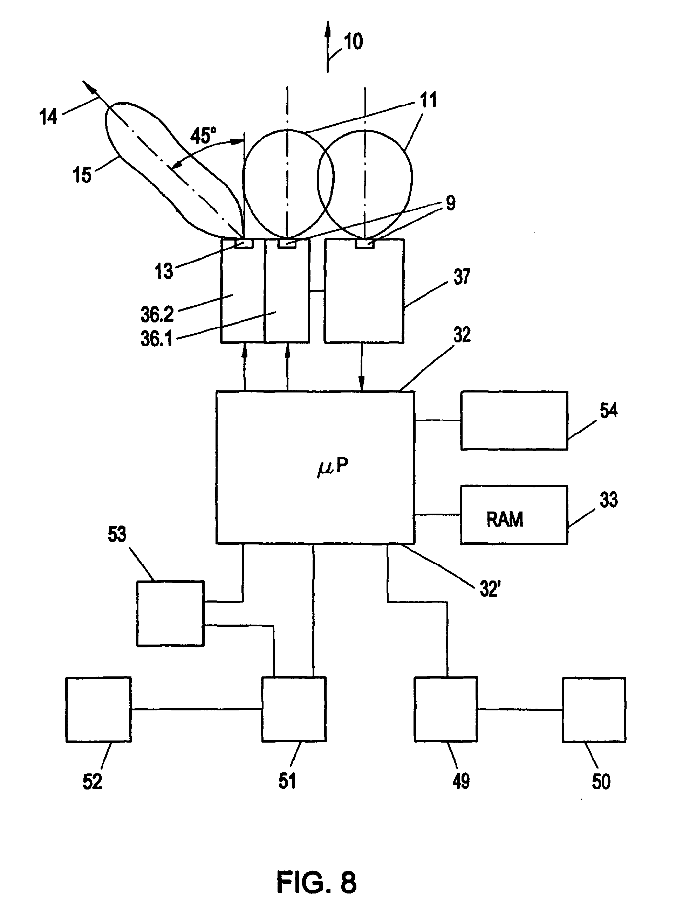

In Fig. 8 sind in Entsprechung zu Fig. 6A als Bausteine für die OBU 2 der Mikroprozessor 32 samt angeschlossenem RAM-Speicher 33 sowie die Sende- und Empfangselektroniken 36.1, 36.2 und 37 (vgl. auch Fig. 6) veranschaulicht. Diesen sind die beiden IR-Elemente-Arrays 9 bzw. 13 zugeordnet, die in der ersten Richtung 10 bzw. zweiten Richtung 14 ausgerichtet sind, vgl. die entsprechenden Sende- und Emfpangskeulen 11 in der ersten Richtung 10 bzw. die Sendekeule 15 in der zweiten Richtung 14. Die Empfangskeule 11 ist eingerichtet, auch aus der Richtung entgegengesetzt zur zweiten Richtung 14 kommende Signale empfangen zu können, d.h. die entsprechenden IR-Empfangselemente des ersten Arrays 9 sind mit entsprechend breiter Richtcharakteristik vorgesehen.

Für den Fall der Verwendung außer für Vergebührungszwecke auch für einen Informationsaustausch wie in Fig. 7 angedeutet müssen nunmehr die über die IR-Empfangselemente 9 und die Empfangselektronik 37 empfangenen Signale oder Daten voneinander unterschieden und getrennt werden, was beim Mikroprozessor 32 einfach aufgrund der Art der Daten durchgeführt werden kann - der Mikroprozessor 32 bildet somit zugleich einen Datendiskriminator 32', um die empfangenen Daten je nach ihrer Art entweder einem ersten Datenverarbeitungskreis 49 für das nur schematisch in Fig. 8 mit einem Block 50 veranschaulichte Gebührenmodul zu übertragen, oder um die bei einem Informationsaustausch mit einem entgegenkommenden Fahrzeug 48 empfangenen Daten einem zweiten Datenverarbeitungskreis 51 zuzuführen, der entsprechende Nachrichten einer Wiedergabeeinheit 52 zuführt. Bevorzugt ist dabei vorgesehen, dass eine bestimmte Anzahl von vordefinierten Nachrichten wie "Achtung Nebel", "Achtung Unfall" oder "Achtung Stau" usw. in einem Speicher 53 gespeichert gehalten werden, wobei die empfangenen Daten Adresseninformationen zum Abrufen der entsprechenden Nachrichten aus dem Speicher 53 zwecks Wiedergabe über die Wiedergabeeinheit 52 enthalten. Dabei kann die Wiedergabeeinheit 52 einfach ein Display, also eine optische Wiedergabeeinheit, sein, anstatt dessen oder aber zusätzlich kann auch eine akustische Wiedergabeeinheit vorgesehen sein, wobei die im Speicher 53 gespeicherten Nachrichten dann entsprechende Sprachinformationen (zusätzlich) beinhalten.

Der Vollständigkeit halber ist in Fig. 8 auch noch ein Programmspeicher 54 für den Mikroprozessor 32 veranschaulicht.

Wenn in Fig. 7 die zweite Richtung 14 als schräg nach links vorne verlaufend veranschaulicht ist, so ist dies nicht als einschränkend zu sehen, da in Ländern mit Linksverkehr eine spiegelbildliche Anordnung, mit einem Verlauf der zweiten Richtung 14 schräg seitlich nach rechts anstatt nach links, vorzusehen wäre. Insbesondere kann die Kommunikationseinrichtung 2 von Vornherein mit einer mittleren Gruppe (einem mittleren Array) 9 von Infrarot-Sende- und Empfangselementen sowie zwei seitlichen IR-Elementen 13, einmal für eine seitliche Abstrahlung nach links und einmal für eine seitliche Abstrahlung nach rechts, vorgesehen werden. Je nach Land, in dem die Kommunikationseinrichtung bzw. OBU 2 dann montiert wird, kann dann entweder die eine oder die andere seitliche IR-Elemente-Gruppe 13 aktiviert werden.

## Patentansprüche

1. kraftfahrzeug-Infrarot(IR)-Kommunikationseinrichtung (2), vorzugsweise für ein elektronisches Vergebührungssystem, mit in einem Gehäuse (4) angeordneten, gemäß einer ersten Richtung (10) ausgerichteten IR-Sende- und Empfangselementen (9), wobei diese erste Richtung im in einem Kraftfahrzeug eingebauten Zustand der Kommunikationseinrichtung (2) zumindest im Wesentlichen in Fahrtrichtung des Kraftfahrzeugs liegt, mit im Gehäuse (4) zusätzlich angeordneten, zumindest gemäß einer zweiten Richtung (14) ausgerichteten weiteren IR-Elementen (13), wobei diese zweite Richtung (14), bezogen auf die erste Richtung (10), zu einer Seite hin ausgerichtet ist, und mit einer Sende- und Empfangselektronik (36; 37), **dadurch gekennzeichnet, dass** als weitere, in der zweiten Richtung (14) ausgerichtete IR-Elemente (13) nur IR-Sendeelemente vorgesehen sind und für die in der ersten Richtung (10) ausgerichteten IR-Empfangselemente (9) eine für einen Empfang auch in der seitlichen Richtung ausreichend breite Richtcharakteristik (11) vorgesehen ist.

2. Kommunikationseinrichtung nach Anspruch 1, **dadurch gekennzeichnet, dass** die Richtcharakteristik (11) der in der ersten Richtung ausgerichteten IR-Empfangselemente (9) einen Halbwertswinkel von ±50° bis ±75°, vorzugsweise ca. ±60°, aufweist.

3. Kommunikationseinrichtung nach Anspruch 1 oder 2, **dadurch gekennzeichnet, dass** die in der zweiten Richtung (14) ausgerichteten IR-Sendeelemente (13) zum Teil eine erste, schmälere Fernfeld-Richtcharakteristik (21) und zu zumindest einem anderen Teil eine zweite, breitere, der ersten überlagerte Nahfeld-Richtcharakteristik (22) aufweisen.

4. Kommunikationseinrichtung nach Anspruch 3, **dadurch gekennzeichnet, dass** die zumindest zwei überlagerten Richtcharakteristiken (21, 22) in einem vorgegebenen Mischverhältnis, z.B. von ca. 2:1, einander überlagert sind, wobei das Mischverhältnis durch die jeweilige Anzahl der IR-Sendeelemente (13) und/oder die vorgegebene Größe des durch, sie fließenden Stroms bestimmt ist.

5. Kommunikationseinrichtung nach Anspruch 3 oder 4, **dadurch gekennzeichnet, dass** die schmälere Fernfeld-Richtcharakteristik (21) einen Halbwertswinkel von ca. ±10° aufweist.

6. Kommunikationseinrichtung nach einem der Ansprüche 3 bis 5, **dadurch gekennzeichnet, dass** die breitere Nahfeld-Richtcharakteristik (22) einen Halbwertswinkel von ca. ±20° aufweist.

7. Kommunikationseinrichtung nach einem der Ansprüche 1 bis 6, **dadurch gekennzeichnet, dass** die zweite Richtung (14) mit der ersten Richtung in Draufsicht gesehen einen Seitenwinkel von 35° bis 55°, vorzugsweise ca. 45°, einschließt.

8. Kommunikationseinrichtung nach einem der Ansprüche 1 bis 7, **dadurch gekennzeichnet, dass** mit der Empfangselektronik (37) ein die Art von empfangenen Daten erkennender Datendiskriminator (32') verbunden ist, an den verschiedene Datenverarbeitungskreise (49, 51) angeschlossen sind, denen je nach Datenart-Erkennung die zugehörigen Daten zugeführt werden.

9. Kommunikationseinrichtung nach einem der Ansprüche 1 bis B, **dadurch gekennzeichnet, dass** einem Datenverarbeitungskreis (51) ein Speicher (53) für vorgegebene Nachrichten zugeordnet ist und von einer anderen Kraftfahrzeug-Kommunikationseinrichtung in der zweiten Richtung (14) gesendete, über die IR-Empfangselemente (9) empfangene, von der Empfangselektronik (37) dem Datenverarbeitungskreis (51) zugeleitete Daten Adresseninformationen zum Auslesen der jeweiligen Nachrichten aus dem Speicher (53) umfassen.

10. Kommunikationseinrichtung nach Anspruch 9, **gekennzeichnet durch** eine optische und/oder akustische Wiedergabeeinheit (52) für die Nachrichten.

11. Kommunikationseinrichtung nach einem der Ansprüche 1 bis 10, **dadurch gekennzeichnet, dass** ein Datenverarbeitungskreis (49) einer Vergebührungseinheit (50) zugeordnet sowie mit der Sendeelektronik (36.1) zwecks Rücksenden von Vergebührungen betreffenden Daten in der zweiten Richtung (14) verbunden ist.

## Claims

1. A motor vehicle infrared (IR) communication device (2), preferably for an electronic fee-charging system, comprising IR transmitting and receiving elements (9) arranged in a housing (4) and oriented according to a first direction (10), which first direction extends at least substantially in the travel direction of the motor vehicle when the communication device (2) is in a state installed in a motor vehicle, and comprising further IR elements (13) additionally arranged in the housing (4) and oriented at least according to a second direction (14), this second direction (14) being oriented towards one side, relative to the first direction (10), and comprising transmitting and receiving electronics (36, 37), **characterized in that**, as further IR elements (13) oriented in the second direction (14), only IR transmitting elements are provided, and **in that** for the IR receiving elements (9) oriented in the first direction (10), a directional characteristic (11) which is sufficiently broad also for receiving in the lateral direction is provided.

2. A communication device according to claim 1, **characterized in that** the directional characteristic (11) of the IR receiving elements (9) oriented in the first direction has a half value angle of from ±50° to ±75°, preferably approximately ±60°.

3. A communication device according to claim 1 or 2, **characterized in that** the IR transmitting elements (13) oriented in the second direction (14) partly comprise a first, narrower far field directional characteristic (21) and for at least one other part comprise a second, wider near field directional characteristic (22) overlapping the first directional characteristic.

4. A communication device according to claim 3, **characterized in that** the at least two overlapping directional characteristics (21, 22) overlap each other in a pre-determined mixing ratio, e.g. of approximately 2:1, the mixing ratio being determined by the respective number of IR transmitting elements (13) and/or the pre-determined amount of the current flowing therethrough.

5. A communication device according to claim 3 or 4, **characterized in that** the narrower far field directional characteristic (21) has a half-value angle of approximately ±10°.

6. A communication device according to any one of claims 3 to 5, **characterized in that** the wider near field directional characteristic (22) has a half-value angle of approximately ±20°.

7. A communication device according to any one of claims 1 to 6, **characterized in that** the second direction (14) defines an azimuth angle with the first direction, seen in top view, of from 35° to 55°, preferably approximately 45°.

8. A communication device according to any one of claims 1 to 7, **characterized in that** a data discriminator (32') determining the type of received data is connected to the receiving electronics (37), to which different data processing circuits (49, 51) are connected to which the respective data are supplied in dependence on the data type determination.

9. A communication device according to any one of claims 1 to 8, **characterized in that** a memory (53) for pre-determined messages is associated to a data processing circuit (51) and **in that** data transmitted in the second direction (14) from a different motor vehicle communication device, received via the IR receiving elements (9) and supplied by the receiving electronics (37) to the data processing circuit (51) comprise address information for reading out the respective messages from the memory (53).

10. A communication device according to claim 9, **characterized by** an optic and/or acoustic reproduction unit (52) for the messages.

11. A communication device according to any one of claims 1 to 10, **characterized in that** a data processing circuit (49) is associated to a fee charging unit (50) as well as connected to the transmission electronics (36.1) for returning data relating to fees charged in the second direction (14).

## Revendications

1. Dispositif de communication à infrarouge pour véhicules (2), de préférence pour un système de taxation électronique, comportant des éléments d'émission et de réception à infrarouges (9) orientés selon une première direction (10) et disposés dans un boîtier (4), où cette première direction se trouve au moins sensiblement dans le sens de la marche du véhicule dans un état du dispositif de communication (2) inséré dans le véhicule, au moins d'autres éléments IR (13) orientés selon une seconde direction (14), où cette seconde direction (14), par rapport à la première direction (10), est orientée vers un côté, et comportant une électronique d'émission et de réception (36 ; 37), **caractérisé en ce que**, comme autres éléments IR (13) orientés dans la seconde direction (14), sont prévus uniquement des éléments d'émission IR et pour les éléments de réception IR (9) orientés dans la première direction (10) est prévue une caractéristique directionnelle (11) suffisamment large pour une réception également dans la direction latérale.

2. Dispositif de communication selon la revendication 1, **caractérisé en ce que** la caractéristique directionnelle (11) des éléments de réception IR (9) orientés dans la première direction présentent un angle de demi-valeur de ±50° à ±75°, de préférence environ ±60°.

3. Dispositif de communication selon la revendication 1 ou 2, **caractérisé en ce que** les éléments d'émission IR (13) orientés dans la seconde direction (14) présentent d'une part une première caractéristique directionnelle en champ lointain très étroite (21) et pour au moins une autre part une seconde caractéristique directionnelle en champ proche (22) superposée sur la première.

4. Dispositif de communication selon la revendication 3, **caractérisé en ce que** les au moins deux caractéristiques superposées (21, 22) se superposent selon un rapport de mélange prédéterminé, par exemple d'environ 2:1, où le rapport de mélange est déterminé par le nombre respectif des éléments d'émission IR (13) et/ou la grandeur prédéterminée du flux s'écoulant à travers eux.

5. Dispositif de communication selon la revendication 3 ou 4, **caractérisé en ce que** la caractéristique directionnelle en champ lointain très étroite (21) présente un angle de demi-valeur d'environ ±10°.

6. Dispositif de communication selon l'une des revendications 3 à 5, **caractérisé en ce que** la caractéristique directionnelle en champ proche plus large (22) présente un angle de demi-valeur d'environ ±20°.

7. Dispositif de communication selon l'une des revendications 1 à 6, **caractérisé en ce que** la seconde orientation (14) forme avec la première direction, en vue de dessus, un angle latéral de 35° à 55°, de préférence environ 45°.

8. Dispositif de communication selon l'une des revendications 1 à 7, **caractérisé en ce qu'**un discriminateur de données (32') reconnaissant le type de données reçues, auquel plusieurs circuits de traitement de données différents (49,51) sont reliés, auxquels sont délivrées les données associées selon la reconnaissance du type de données, est relié à l'électronique de réception (37).

9. Dispositif de communication selon l'une des revendications 1 à 8, **caractérisé en ce qu'**une mémoire (53) pour les informations prédéterminées est associée à un circuit de traitement de données (51) et les données envoyées par un autre dispositif de communication pour véhicules dans la seconde direction (14), reçues par l'intermédiaire des éléments de réception IR (9), et délivrées par l'électronique de réception (37) au circuit de traitement de données (51) comprennent des informations d'adresse pour lire les informations respectives de la mémoire (53).

10. Dispositif de communication selon la revendication 9, **caractérisé par** une unité de reproduction (52) optique et/ou acoustique pour les informations.

11. Dispositif de communication selon l'une des revendications 1 à 10, **caractérisé en ce** q'un circuit de traitement de données (49) est relié à une unité de taxation (50) ainsi qu'à une électronique d'émission (36.1) en vue du retour des données concernant le taxation dans la seconde direction (14).
